# EUROPEAN PATENT APPLICATION

(11) **EP 1 107 593 A2**
(43) Date of publication of application: **13.06.2001**
(21) Application number: 00126855.6
(22) Date of filing: 07.12.2000
(51) Int. Cl.: H04N 7/16

(54) **Television broadcasting system having an automated charging system**

(30) Priority: 09.12.1999 JP 35023299
(71) Applicant: NEC CORPORATION, Tokyo (JP)
(72) Inventor: Tsukamoto, Yuji, Minato-ku, Tokyo (JP); Tsujisawa, Takahiko, Minato-ku, Tokyo (JP); Ajima, Hideaki, Minato-ku, Tokyo (JP)
(74) Representative: Glawe, Delfs, Moll & Partner

(57) **Abstract**

A cable television broadcasting system has a set top box having a function of selecting a charging system among a plurality of charging systems depending on the viewing type for a chargeable program. If the viewer allows an advertisement program to be displayed during display of the chargeable program, the fee is lowered. If the viewer clicks the icon for the advertisement program to display the advertisement program, if the viewer makes an access to the advertisement data through the internet, and if the viewer buys a commodity through the internet, then the fee is stepwise lowered. The sponsors of the advertisements pay sponsor fees depending on the access frequency by the viewers.

## Description

### BACKGROUND OF THE INVENTION

### (a) Field of the Invention

The present invention relates to a television broadcasting system having an automated charging system and, more particularly, to a television broadcasting system which broadcasts free programs such as for advertisement and chargeable programs such as for entertainment, and is capable of charging the viewers for the chargeable programs in a plurality of charging grades depending on the viewing types of the viewer.

### (b) Description of a Related Art

Development of satellite televisions has allowed operation of a variety of types of broadcasting services including a plurality of higher image-quality broadcastings and data broadcastings. In particular, in a digital broadcasting system now started on air, a plurality of digital programs are distributed on a high-definition image broadcasting system to the whole domestic area. The digital broadcasting system is expected to drastically change the conventional terrestrial broadcasting systems and cable television broadcasting systems.

Among the conventional broadcasting systems, the local cable television broadcasting systems now suffer from a limited increase in the number of subscribers, and are anxious about the advent of the digital satellite broadcasting systems. For a continued operation of the local cable television broadcasting system, the broadcasting system should satisfy the following items:
broadcasting regional information more close to the local area, including advertisement programs for the local area;
increased income from the sponsors of advertisements to stabilize the management of the broadcasting system; and
allowance of a variety of viewing types depending on the needs of the viewer and flexible operation of the charging system depending the viewing type of the viewer with respect to the chargeable programs.

There has been no known cable television broadcasting system which satisfies all the above items and broadcasts chargeable programs and free programs separately and at the same time. Neither a patent publication teaches or disloses such a broadcasting system.

For the digital high-definition broadcasting system, it is considered that there are a variety of viewing types of the viewers. Some viewers may reject mere insertion of advertisements between the scenes of an entertainment program such as used in the conventional commercial broadcasting systems. On the other hand, other viewers may allow the insertion of advertisements between the scenes or display thereof on a part of the screen, if the fee for the chargeable program is reduced thereby. Although it is desired to reform the cable television broadcasting systems for adapting the same to the variety of viewing types, a solution for the reform has not yet been achieved.

In summary, it is desired that the cable television broadcasting system:
increase the number of subscribers more steadily than ever;
continue long-term operation by broadcasting regional advertisement programs more close to the local area;
employ a variety of charging systems depending on the increasing variety of needs of the viewers to thereby offer increased advantage to the viewer; and
receive more incomes from the sponsors of the advertisements to realize stable management of the broadcasting system.

### SUMMARY OF THE INVENTION

In view of the above, it is an object of the present invention to provide a television broadcasting system which is capable of selecting a suitable charging system from a plurality of charging systems for charging fees for the chargeable broadcasting programs based on the viewing types of the viewer while broadcasting chargeable programs and advertisement programs at the same time.

The present invention provides a television broadcasting system including a broadcast service equipment disposed at a broadcasting side for delivering chargeable programs and advertisement programs, and a plurality of set top boxes (STBs) each disposed at a subscriber side for receiving the chargeable programs and the advertisement programs to display the chargeable programs and the advertisement programs on a screen, each of the STBs having a function for selecting a charging system among a plurality of charging systems based on a viewing type of the subscriber side with respect to viewing the chargeable programs and the advertisement programs.

In accordance with the cable television broadcasting system of the present invention, the subscriber side can select the viewing type for the programs based on the needs of the subscriber side. On the other hand, the broadcasting side can charge the subscriber side for the chargeable programs in a flexible charging system depending on the viewing type selected by the subscriber side while receiving advertisement fee from the sponsor of the advertisement by an amount corresponding to the reduction of the fee caused by the flexible charging system.

### PREFERRED EMBODIMENTS OF THE INVENTION

A cable television broadcasting system according to a preferred embodiment of the present invention includes a broadcast service equipment disposed at a broadcasting side (or broadcasting station) for delivering chargeable programs and advertisement programs through a cable, and a plurality of set top boxes (STBs) each disposed at a subscriber side for receiving the chargeable programs and the advertisement programs through the cables to display the chargeable programs and the advertisement programs on a screen. The STB has a function for automatically charging the subscriber with fees based on the time length during which the subscriber views the chargeable programs and the viewing type of the subscriber.

Each viewer on the subscriber side of the cable television broadcasting system selects, before viewing a chargeable program, one of the two options including a first option wherein the viewer views the chargeable programs without viewing the advertisement programs and a second option wherein the viewer views the advertisement programs in addition to the chargeable program. If the viewer selects the first option, the broadcasting system sets a first charging system which charges a highest fee. On the other hand, if the viewer selects the second option, the broadcasting system sets a second charging system.

If the subscriber selects the second option, the STB allows a plurality of advertisement programs to be displayed as advertisement icons on a portion of the image of a chargeable program displayed on the screen.

The viewer of a chargeable program may select another first option within the second option (first-in-second option), wherein the icons disappear from the screen after a specified time length elapsed since the start of the display of the chargeable program. In this case, the broadcasting system sets a first-in-second charging system at that time which charges the viewer with a second highest fee. If the viewer does not select the first-in-second option, the viewer automatically selects another second option within the previous second option (second-in-second option) wherein the icons on the screen are displayed until the end of the chargeable program. In this case, the broadcasting system sets a second-in-second charging system.

In the case of selection of second-in-second option, if the viewer of the chargeable program wishes to temporarily stop the viewing of the chargeable program by clicking one of the advertisement icons, an advertisement program starts on the screen instead of the chargeable program. In this case, the broadcasting system sets a third charging system, in which the fee for the chargeable program is lower than the fee in the second-in-second charging system, and the chargeable program delivered through the cable is stored in a cash storage device, such as a hard disk. When the viewer restarts viewing the chargeable program after viewing the advertisement program, the chargeable program is displayed on the screen in a time-shift display scheme. In the time-shift display scheme, the chargeable program is read out onto the screen from the cash storage device with a time delay from the broadcasting itself, whereas another part of the chargeable program is being stored in the hard disk.

The viewer, while observing the advertisement program, can make an access for advertisement data through the internet to obtain detailed commodity data in connection with the advertisement program. In this case, the broadcasting system sets a fourth charging system, in which the fee is lower than the fee in the third charging system, and the chargeable program is successively stored in the cash storage device. After the viewer ends the access for the advertisement data, the chargeable program is displayed in the time-shift display scheme while reading the chargeable program from the cash storage device.

If the viewer makes a contract with the sponsor of the advertisement program for purchase of the commodity or reservation thereof, the broadcasting system sets a fifth charging system, in which the fee for the chargeable program is lower than the fee in the fourth charging system.

The broadcasting system of the present embodiment can set a plurality of stepwise charging systems to allow flexibility in the charge for the chargeable program.

The cable television broadcasting system of the present embodiment has an advantage over the satellite broadcasting system in that a regional advertisement program more close to the local area can be delivered, in view that the satellite broadcasting system is inherently directed to a broader area. In addition, the subscriber, if allowing the advertisement program to be displayed on the screen, can receive merits therefrom wherein the subscriber enjoys a chargeable program at a lower fee and make a direct access to the commodity data. On the other hand, the sponsors of the advertisement programs can deliver direct advertisements to the user and receive information therefrom as to what time of day and what type of the advertisement program is most effective for broadcasting the advertisement program.

A STB used in the present embodiment has a variety of functions including a broadcast receiving function which is common to the conventional STBs, a data storage function for storing the broadcast programs, an internet function for connecting the STB to the internet, a browser function for displaying code data, a retrieving function for retrieving the advertisement programs stored in the STB, and a charging and calculating function for selecting a charging system from a plurality of charging systems and calculating the total fee by summing individual fees defined in the plurality of charging systems.

The data storage function is used to record the chargeable program when the viewer selects the advertisement program and/or the advertisement data. This function allows the time-shift display of the chargeable program for the STB after the restart of the chargeable program. The data storage function also allows the STB to record the advertisement program and the charged data by using this function. The storage function is preferably implemented by a hard disk installed within the STB because of the higher storage capacity and the access performance thereof.

The internet function is used for the viewer to obtain information or purchase of the commodities in connection with the advertisement programs. An internet icon displayed in the advertisement program on the screen is clicked for activating this function and allowing an access to the commodity data tgr the internet.

The browser function which is generally accompanied with the internet function is used for displaying the commodity information supplied through the internet onto the screen. This function is conventionally installed within personal computers and some internet television sets.

The retrieving function is used to retrieve a specified advertisement program among the programs stored by the storage function by specifying a trade mark, a brand name or the name of sponsor. The retrieved program is displayed on the screen. Although a plurality of advertisement icons are displayed on the screen during display of the chargeable program, the number of icons displayed on the screen at a time is relatively limited and thus the viewer may overlook the advertisement program for the commodity that the user desires. This function allows the viewer to find the advertisement program for the desired commodity after overlooking the same.

The charging and calculating function allows the STB to select a specific charging system at any time based on the viewing type selected by the viewer. The charging function stores the time length for viewing the chargeable program together with the code of selected charging system by using the storage function. The fees in the stored charged information is summed for a specified period and collected through the internet from the subscriber side to the broadcasting side or broadcasting corporation. The broadcasting corporation collects the charge from the subscriber based on the summed fees.

The broadcasting corporation distributes the own STBs having the above functions to the subscribers, and delivers through the STBs and the cables the chargeable programs such as for sports, movies and dramas as well as advertisement programs produced by the broadcasting corporation. The advertisement programs produced by the broadcasting corporation include nationwide programs delivered through mass media and regional advertisement programs more close to the local area, such as for small-size enterprises including retailer, laundry, supermarket, restaurant, book shop etc, for which the broadcasting corporation have not operated. The broadcasting corporation can thus expand own business area. The sponsors may produce own home pages, advertisement data, or advertisement program in connection with their commodities. In an alternative, the sponsors may request the broadcasting corporation or an advertisement corporation to produce the home pages etc.

After the subscriber selects the second option wherein the viewer allows the advertisement program to be displayed on the screen, the charging system is selected depending on the viewing type of the viewer. In this respect, a larger time length during which the viewer allows the advertisement programs to be displayed on the screen reduces the charge for the chargeable programs, and a higher frequency by which the viewer makes an access to the advertisement data or purchases the commodity also reduces the charge for the chargeable programs. This allows an increase of the number of subscribers.

The sponsor fees paid by the sponsors to the broadcasting corporation depend on the number of subscribers, the viewing types of the viewers, the access frequency of the advertisement program or advertisement data by the viewers, and the purchase contracts made for the commodities by the viewers in connection with the advertisement programs. In this respect, a higher frequency of the contracts, for example, allows the sponsor to have a favorable evaluation on the advertisement programs, and pay a higher sponsor fee to the broadcasting corporation.

In an alternative of the above embodiment, the selection of the first or the second option on the subscriber side may be conducted at the time of subscription for the broadcasting system instead of each viewing time for the chargeable program.

The present invention is described with reference to a cable television broadcasting system; however, the present invention can be extended to other broadcasting systems such as a satellite broadcasting system.

Since the above embodiments are described only for examples, the present invention is not limited to the above embodiments and various modifications or alterations can be easily made therefrom by those skilled in the art. without departing from the scope of the present invention.

## Claims

1. A television broadcasting system comprising a broadcast service equipment disposed at a broadcasting side for delivering chargeable programs and advertisement programs, and a plurality of set top boxes (STBs) each disposed at a subscriber side for receiving the chargeable programs and the advertisement programs to display the chargeable programs and the advertisement programs on a screen, characterized in that:
each of the STBs has a function for selecting a charging system among a plurality of charging systems based on a viewing type of the subscriber side with respect to viewing the chargeable programs and the advertisement programs.

2. The television broadcasting system as defined in claim 1, wherein the subscriber side selects, before viewing one of the chargeable programs, either a first option for viewing no advertisement program and a second option for viewing at least one of the advertisement programs together with the one of the chargeable programs, and the broadcasting side sets a first charging system or a second charging system depending on the first option or the second option.

3. The television broadcasting system as defined in claim 2, wherein each of the STBs allows the at least one of the advertisement programs to be displayed on the screen as an advertisement icon during display of the one of the chargeable programs when the first option is selected.

4. The television broadcasting system as defined in claim 3, wherein a click of the advertisement icon to display one of the advertisement programs on the screen allows the broadcasting side to set a charging system which charges a lower fee.

5. The television broadcasting system as defined in claim 4, wherein each of the STBs has an internet function for receiving advertisement data for display thereof on the screen during display of one of the advertisement programs.

6. The television broadcasting system as defined in claim 5, wherein an access to advertisement data via the internet allows the broadcasting side to set another charging system which charges a lower fee.

7. The television broadcasting system as defined in claim 6, wherein purchase of a commodity in connection with one of the advertisement programs allows the broadcasting side to set another charging system which charges a lower fee.

8. The television broadcasting system as defined in claim 3, wherein each of the STBs has a storage device for storing one of the chargeable programs after one of the advertisement icons is clicked.

9. The television broadcasting system as defined in claim 8, wherein the chargeable program is displayed in a time-shift display scheme after the chargeable program is restarted from a temporary stop by the click of the advertisement icon.

10. A method for setting a charging system for a cable television broadcasting system, comprising the steps of allowing a viewer to select a first option to view only a chargeable program or a second option to view an advertisement program as an icon together with a chargeable program, allowing the viewer to select the icon to display the advertisement program instead of the chargeable program while storing the chargeable program in a storage device, and allowing the viewer to select restart of the chargeable program in a time-shift display scheme by reading the chargeable program from the storage device.
